# DEMANDE DE BREVET EUROPEEN

(11) **EP 0 919 736 A1**
(43) Date de publication de la demande: **02.06.1999**
(21) Numéro de dépôt: 98402921.5
(22) Date de dépôt: 24.11.1998
(51) Int. Cl.: F16C 13/04, F27B 7/22

(54) **Système de liaison d'un bandage annulaire avec un tambour rotatif tel qu'un four rotatif**

(30) Priorité: 25.11.1997 FR 9714786
(71) Demandeur: TECHNIP, 92400 Courbevoie (FR)
(72) Inventeur: Bonin, Jacques Louis, 71530 Chamforfueil (FR)
(74) Mandataire: Beauchamps, Georges

(57) **Abrégé**

Système de liaison d'un bandage annulaire (1) avec un tambour rotatif (10) comportant des cales (2a, 2b) venant s'appuyer sur les faces latérales du bandage et maintenues en place par des éléments de retenue fixés au tambour, lesdites cales comportant une portion (8) qui s'insère sous le bandage, les cales étant reliées par paires par des moyens de serrage indépendants du bandage (13) et traversant les portions de cales insérées sous le bandage, les moyens de commande de serrage (4) des paires successives de cales étant disposés alternativement de part et d'autre du bandage.

## Description

L'invention concerne un système de liaison entre un bandage annulaire et un tambour ou tube rotatif, tel qu'un four rotatif, disposé sensiblement concentriquement à l'intérieur du bandage annulaire. Ces bandages annulaires, lorsqu'ils sont utilisés avec des fours rotatifs, servent de surface de contact, autrement dit, de chemin de roulement entre les fours rotatifs et leurs supports généralement réalisés sous forme de galets montés sur roulements.

On connait déjà des systèmes de fixation s'appliquant à des bandages dont la surface intérieure est pourvue de dents (DE-A-4 312 508). Les dents, ou crans, de ces bandages ont pour objet de reprendre les efforts tangentiels liés à la rotation du tambour et du bandage et d'éviter le glissement entre la surface intérieure du bandage et la circonférence extérieure du tambour, ceci afin de ne pas user et détériorer les cales de ces tambours par glissement et frottement. Ces dents s'usent, ce qui entraîne la nécessité d'arrête-r le four, d'où perte de production et réparations d'un coût élevé

Pour éviter les problèmes rencontrés avec les bandages crantés et pour limiter le coût élevé de ces bandages, on a proposé d'utiliser des bandages annulaires dont la surface intérieure est lisse, dépourvue de crans; des cales sont interposées entre le bandage et le four rotatif. Dans cette conception, le bandage a la possibilité de glisser sur ces cales s'il n'est pas fixé sur ces dernières. Ce bandage de type flottant est plus économique mais il présente certains inconvénients, principalement de permettre une ovalisation du four rotatif entraînant des usures de briques réfractaires constituant son isolation intérieure, et en outre des problèmes d'usure et de maintenance de ces bandages.

Le document WO-95/34792 prévoit d'utiliser un bandage annulaire dont la surface intérieure est lisse et qui est pourvu de cales fixées aux parois latérales du bandage, ce qui nécessite le percement du bandage en de nombreux points, d'où résultent travail considérable et réduction de la résistance mécanique du bandage. Des soudures nombreuses doivent être pratiquées sur le tambour lors du montage pour éviter le déplacement tangentiel et axial des cales lors du fonctionnement, ce qui complique le changement des cales lorsque ce dernier devient nécessaire. Dans ce système, aucune portion de cale ne se trouve sous le bandage.

Le système de fixation de l'invention a pour objet de remédier aux inconvénients précités des systèmes de fixation de bandages à surface intérieure lisse. Il est notamment d'un montage aisé, il ne requiert qu'un nombre limité de soudures sur le tambour, il est relativement aisé à démonter et il ne requiert aucune modification ni percement du bandage à surface intérieure lisse, ce qui le rend particulièrement bien adapté à la reconversion d'unités possédant de tels bandages.

Le système de l'invention ne requiert pas de clavettes de réglage ou de maintien car le système est libre vis-à-vis du bandage pour le montage.

L'invention concerne plus précisément un système de liaison d'un bandage annulaire (1) avec un tambour rotatif (10), tel qu'un four rotatif, disposé sensiblement concentriquement à l'intérieur du bandage annulaire, ledit système comportant des cales (2a, 2b) disposées par paires selon une direction parallèle à l'axe du tambour et susceptibles de venir s'appuyer l'une sur une première face latérale (14) du bandage annulaire et l'autre sur la face latérale opposée (15) dudit bandage, lesdites cales étant maintenues tangentiellement en place par des éléments de retenue fixés au tambour (6a, 6b),
caractérisé en ce que les cales de chaque paire comportent chacune une portion relativement mince (8) qui s'insère sous le bandage et qui est solidaire d'une portion surélevée (9) comportant une face (16 ou 17), appelée surface d'appui, pouvant s'appuyer sur une face latérale correspondante (14 ou 15) du bandage, et en ce que les cales de chaque paire sont reliées l'une à l'autre par des moyens de serrage indépendants du bandage (13) et traversant au moins en partie lesdites portions de cales insérées sous le bandage, permettant de rapprocher l'une de l'autre les portions de cales situées sous le bandage et donc les cales elles-mêmes et de serrer fermement le bandage entre leurs surfaces d'appui (16,17) sur les faces latérales (14,15) du bandage, les moyens de commande de serrage (4) des paires successives de cales étant disposés, certains d'un côté du bandage et les autres de l'autre côté du bandage, tandis que les cales du côté qui ne comporte pas de moyen de commande de serrage sont maintenues en place axialement, à l'extérieur du bandage, par un élément de retenue (7) fixé au tambour.

Dans une forme de réalisation préférée, les moyens de commande de serrage des paires successives de cales sont disposés en alternance, d'un côté puis de l'autre du bandage.

Les chiffres de référence ci-dessus se réfèrent aux figures annexées dans lesquelles:

La figure 1 est une vue en perspective d'un mode de réalisation du dispositif de l'invention après montage sur le tambour d'un four rotatif dont seul un tronçon est représenté.

La figure 2 est une vue en perspective partielle agrandie du dispositif de la figure 1 dans laquelle on n'a pas fait figurer le bandage pour faciliter la compréhension de l'invention.

La figure 3a est une vue en coupe radiale selon AA' du mode de réalisation de la figure 2. La figure 3b est une vue en coupe du mode de réalisation précédent selon un plan parallèle à une arête du tambour.

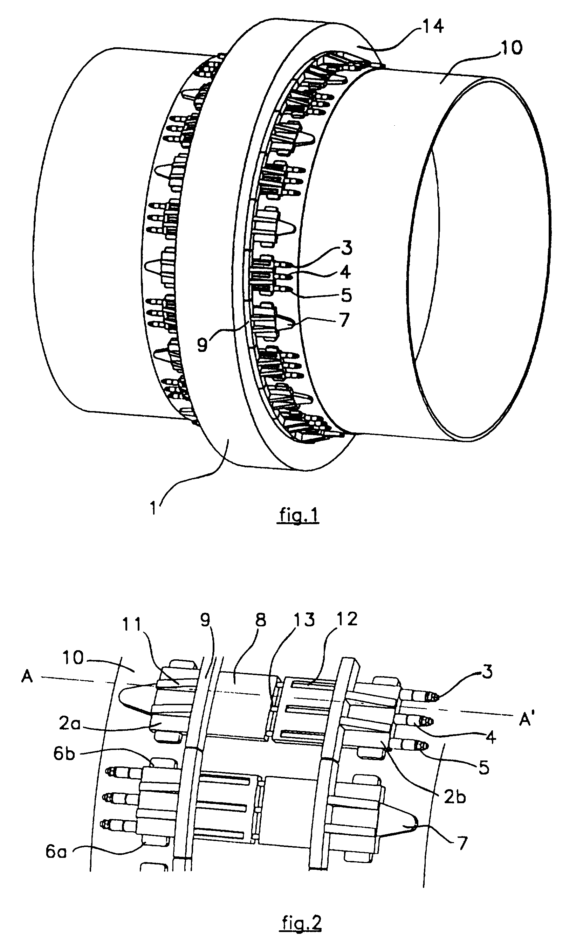

Le tambour 10 est disposé à l'intérieur d'un bandage circulaire 1, en forme de bague ou d'anneau, destiné à servir de surface de support pour le four. Le diamètre intérieur du bandage est plus grand que le diamètre extérieur du tambour afin de ménager un espace destiné à l'insertion des cales. Les faces latérales du bandage sont désignées respectivement par 14 et 15. Seule la face 14 est visible sur la figure 1.

Les cales 2a et 2b peuvent avoir ou non la même forme générale. Elles comportent cependant chacune au moins une portion relativement mince 8 destinée à être placée sous le bandage, de préférence sensiblement au contact de celui-ci, et au moins une portion surélevée, ou mors, 9, comportant une face (16 ou 17) destinée à venir s'appuyer fermement, après serrage de l'ensemble, sur une face latérale (14 ou 15 selon la cale) du bandage, à la manière d'un étau ou d'un serre-joint, ces deux portions étant solidaires l'une de l'autre. La portion surélevée peut avoir une largeur telle, dans le sens tangentiel, que les portions surélevées des paires de cales successives viennent sensiblement au contact les unes des autres, ce qui est préféré, ou avoir une largeur moins grande, avec des espaces entre elles. De même la hauteur de la surface d'appui (16 ou 17) peut être égale ou inférieure à la hauteur de la surface latérale du bandage sur laquelle cette face doit venir s'appuyer.

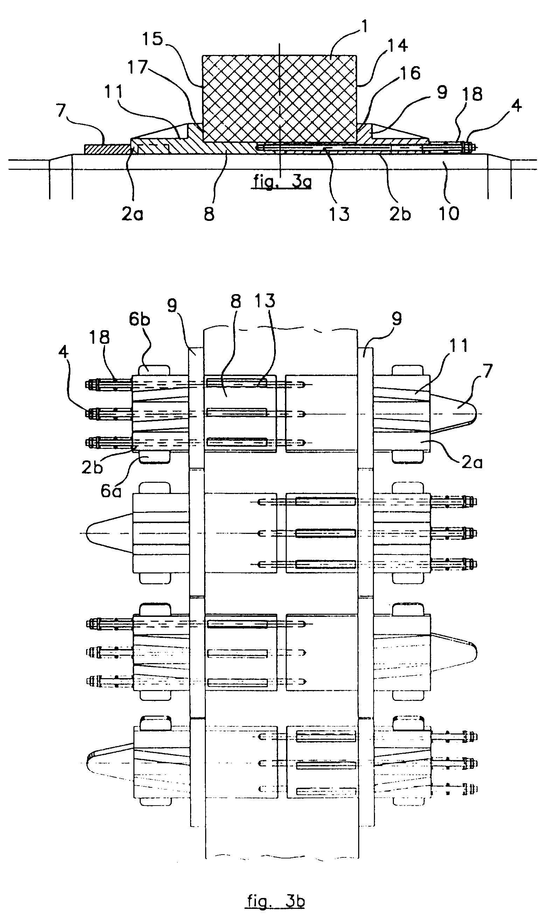

La portion surélevée peut avoir différentes formes; elle peut s'étendre axialement sur toute la longueur de la portion de cale extérieure au bandage ou sur une partie seulement de celle-ci. Une disposition avantageuse est celle des figures 3a et 3b où la portion surélevée n'occupe qu'une partie de ladite longueur de la portion de cale extérieure au bandage, celle au voisinage du bandage, et où des épaulements tels que 11 assurent la rigidité de l'ensemble de la cale. Des évidements tels que 12 peuvent également être prévus.

Les deux cales d'une paire de cales sont reliées par des moyens de serrage indépendants du bandage. Sur les figures 2,3a et 3b ce sont à titre d'exemple une ou des tiges, filetées au moins à leur extrémité extérieure, telles que 13, équipées d'écrous de serrage tels que 4. Dans une forme de réalisation, la tige est fixée à la cale 2a, traverse la cale 2b (seuls des moyens de guidage sont prévus sur la cale 2b) et reçoit l'écrou 4 et les rondelles 18 sur son extrémité filetée. Dans une autre forme de réalisation, les deux cales fonctionnent à la manière d'un étau: c'est alors la tige qui tourne, de manière libre dans la cale 2a et en engageant son filetage externe dans un filetage interne de la cale 2b. La rotation de la tige depuis son extrémité extérieure provoque le rapprochement ou l'éloignement des cales l'une par rapport à l'autre.

Des ressorts, des rondelles élastiques ou équivalents peuvent être placés sur la tige, par exemple sous les écrous, pour faciliter le réglage et permettre de transmettre un effort constant malgré les dilatations différentielles entre les cales et le bandage. Ces ressorts, rondelles ou équivalents permettent de récupérer la différence de dilatation entre la tige et le bandage. Sur la figure 2, trois tiges de serrage avec leurs écrous respectifs (3,4,5) ont été représentées à titre d'exemple. Tout autre moyen de serrage équivalent permettant de rapprocher l'une de l'autre les deux cales d'une paire pourrait être mise en oeuvre.

Les cales sont toutes maintenues en place tangentiellement par des éléments de retenue tels que des plots (6a, 6b), fixés au tambour, tandis qu'un élément de retenue ou plot 7 est disposé au voisinage immédiat de l'extrémité extérieure de chaque cale du type sans moyen de commande du serrage, ce dernier élément étant lui-même fixé au tambour. La fixation peut se faire par soudage ou autrement.

Selon une variante du dispositif, il n'y a pas d'épaulement 11, la cale ayant une forme parallélépipédique simple dans sa portion surélevée, extérieure au bandage.

Dans un mode de réalisation préféré, la portion surélevée des cales est rendue rugueuse mécaniquement sur sa face portant sur le bandage, afin d'augmenter le coefficient de frottement. Dans une autre forme de réalisation préférée, les faces latérales du bandage sont rendues rugueuses mécaniquement sur la partie portant sur les cales, afin d'augmenter le coefficient de frottement.

Lors du montage, un jeu à froid sera conservé entre les cales et le tambour, fonction de la différence de dilatation entre le tambour rotatif et le bandage ; ce jeu s'annulera lors de la mise en température, le fonctionnement s'effectuant sans jeu.

Le système ainsi réalisé est du type dit à bandage fixe, c'est-à-dire ne tournant pas autour du four.

On précisera en outre qu'une cale possédant des moyens de commande de serrage (2b) peut alterner régulièrement, sur chaque côté du bandage, avec une cale sans moyens de commande de serrage (2a) mais comportant un élément de retenue au voisinage de son extrémité, et cela est préféré. On pourrait cependant avoir une alternance de plusieurs cales successives d'un premier type avec plusieurs cales successives du second type, mais cela est moins favorable car il pourrait en résulter un déséquilibre et une éventuelle déformation du bandage ou du tambour.

On précisera aussi que les expressions "axial", "radial" et "tangentiel" se réfèrent aux directions axiale, radiale et tangentielle du tambour; plus précisément la direction tangentielle se situe dans un plan perpendiculaire à l'axe du tambour rotatif.

La présente invention ne se limite pas aux formes de réalisation décrites ci-dessus et en comprend tous les équivalents.

## Revendications

1. Système de liaison d'un bandage annulaire (1) avec un tambour rotatif (10), tel qu'un four rotatif, disposé sensiblement concentriquement à l'intérieur du bandage annulaire, ledit système comportant des cales (2a, 2b) disposées par paires selon une direction parallèle à l'axe du tambour et susceptibles de venir s'appuyer l'une sur une première face latérale (14) du bandage annulaire et l'autre sur la face latérale oposée (15) dudit bandage, lesdites cales étant maintenues tangentiellement en place par des éléments de retenue fixés au tambour (6a, 6b),
caractérisé en ce que les cales de chaque paire comportent chacune une portion (8) qui s'insère sous le bandage et qui est solidaire d'une portion surélevée (9) comportant une face (16 ou 17) appelée surface d'appui, pouvant s'appuyer sur une face latérale correpondante (14 ou 15) du bandage, et en ce que les cales de chaque paire sont reliées l'une à l'autre par des moyens de serrage indépendants du bandage (13) et traversant au moins en partie lesdites portions de cales insérées sous le bandage, permettant de rapprocher l'une de l'autre les portions de cales situées sous le bandage et donc les cales elles-mêmes et de serrer fermement le bandage entre leurs surfaces d'appui (16,17) sur les faces latérales (14,15) du bandage, les moyens de commande de serrage (4) des paires successives de cales étant disposés, certains d'un côté du bandage et les autres de l'autre côté du bandage, tandis que les cales du côté qui ne comporte pas de moyen de commande de serrage sont maintenues en place axialement, à l'extérieur du bandage, par un élément de retenue (7) fixé au tambour.

2. Système selon la revendication 1, dans lequel la portion surélevée des cales est rendue rugueuse mécaniquement sur sa face portant sur le bandage, afin d'augmenter le coefficient de frottement.

3. Système selon la revendication 1 ou 2, dans lequel les faces latérales du bandage sont rendues rugueuses mécaniquement sur la partie portant sur les cales, afin d'augmenter le coefficient de frottement.

4. Système selon l'une quelconque des revendications 1 à 3, dans lequel la portion surélevée des cales a une largeur telle, dans la direction tangentielle au tambour, que les portions surélevées des cales successives viennent sensiblement au contact latéral les unes des autres de chaque côté du bandage.

5. Système selon l'une quelconque des revendications 1 à 4, dans lequel la portion surélevée des cales n'occupe axialement qu'une partie de la portion de cale extérieure au bandage, celle au voisinage du bandage, et dans lequel des épaulements (11) axiaux renforcent la rigidité de l'ensemble de la cale.

6. Système selon l'une quelconque des revendications 1 à 5, dans lequel les moyens de serrage des deux cales d'une paire de cales, indépendants du bandage, sont constitués par au moins une tige fixée à une première cale, traversant la seconde cale à travers des moyens de guidage et terminée par un filetage portant un écrou.

7. Système selon l'une quelconque des revendications 1 à 5, dans lequel les moyens de serrage des deux cales d'une paire de cales, indépendants du bandage, sont constitués par au moins une tige pouvant tourner libre dans une première cale et en engageant son filetage externe dans le filetage interne d'une seconde cale.

8. Système selon la revendication 6 ou 7, dans lequel des ressorts, des rondelles élastiques ou équivalents sont présents sur la tige, afin de récupérer la différence de dilatation entre la tige et le bandage.

9. Système selon l'une quelconque des revendications 1 à 8, dans lequel les paires de cales sont disposées de manière à réaliser une alternance régulière, sur chaque côté du bandage, d'une cale pourvue de moyens de commande de serrage et d'une cale non pourvue de ces moyens.
